# EUROPÄISCHE PATENTANMELDUNG

(11) **EP 4 279 955 A1**
(43) Veröffentlichungstag der Anmeldung: **22.11.2023**
(21) Anmeldenummer: 23174601.7
(22) Anmeldetag: 22.05.2023
(51) Int. Cl.: G01S 13/86, G01S 13/88, G01S 13/06, G01S 17/06, G01S 17/88, G01S 13/56, G01S 17/04, G01S 17/87, G01F 23/284

(54) **SENSOREINRICHTUNG, ANORDNUNG, ROBOTER, STATIONÄRER AUFBAU UND VERFAHREN**

(30) Priorität: 20.05.2022 DE 102022112728
(71) Anmelder: Evocortex GmbH, 90489 Nürnberg (DE)
(72) Erfinder: Ammon, Daniel, 90429 Nürnberg (DE); Wang, Dong, 90402 Nürnberg (DE); Heilmann, Tim, 90482 Nürnberg (DE)
(74) Vertreter: Patentanwälte Magenbauer & Kollegen Partnerschaft mbB

(57) **Zusammenfassung**

Die Erfindung betrifft eine Sensoreinrichtung (1) für die Industrieautomation zur Detektion eines Objekts (2), insbesondere eines Kollisionsobjekts, in einem Detektionsbereich (3), umfassend: eine Radar-Sensoreinheit (4), die ausgebildet ist, unter Verwendung von Radar eine erste Detektion durchzuführen, um zu bestimmen, ob sich in dem Detektionsbereich (3) ein Objekt (2) befindet, und gemäß der ersten Detektion ein Radar-Sensorsignal zu erzeugen, eine ToF-Infrarot-Sensoreinheit (6), die ausgebildet ist, unter Verwendung einer Time-of-Flight-Messung eine zweite Detektion durchzuführen, um zu bestimmen, ob sich in dem Detektionsbereich (3) ein Objekt befindet, und gemäß der zweiten Detektion ein ToF-Sensorsignal zu erzeugen, und eine Rechnereinheit (10), die ausgebildet ist, auf Basis des Radar-Sensorsignals und des ToF-Sensorsignals eine Detektionsinformation zu erzeugen, die anzeigt, ob sich in dem Detektionsbereich (3) ein Objekt (2) befindet.

## Beschreibung

Die Erfindung betrifft eine Sensoreinrichtung für die Industrieautomation zur Detektion eines Objekts, insbesondere eines Kollisionsobjekts, in einem Detektionsbereich, umfassend eine Radar-Sensoreinheit, die ausgebildet ist, unter Verwendung von Radar eine erste Detektion durchzuführen, um zu bestimmen, ob sich in dem Detektionsbereich ein Objekt befindet, und gemäß der ersten Detektion ein Radar-Sensorsignal zu erzeugen.

Die Sensoreinrichtung kann beispielsweise an einem Roboter, insbesondere einem Transportroboter, befestigt sein (oder in diesen integriert sein), und kann insbesondere dazu dienen, festzustellen, ob sich in dem Detektionsbereich ein Objekt befindet, so dass der Roboter auf Basis dieser Feststellung entscheiden kann, ob er sich in den Detektionsbereich bewegen darf oder nicht.

Eine Aufgabe der Erfindung besteht darin, eine Sensoreinrichtung bereitzustellen, die es ermöglicht, mit einer hohen Verlässlichkeit zu detektieren, ob sich in dem Detektionsbereich ein Objekt befindet.

Die Aufgabe wird gelöst durch eine Sensoreinrichtung gemäß Anspruch 1. Die Sensoreinrichtung umfasst ferner eine ToF-Infrarot-Sensoreinheit, die ausgebildet ist, unter Verwendung einer Time-of-Flight-Messung eine zweite Detektion durchzuführen, um zu bestimmen, ob sich in dem Detektionsbereich ein Objekt befindet, und gemäß der zweiten Detektion ein ToF-Sensorsignal zu erzeugen, und eine Rechnereinheit, die ausgebildet ist, auf Basis des Radar-Sensorsignals und des ToF-Sensorsignals eine Detektionsinformation zu erzeugen, die anzeigt, ob sich in dem Detektionsbereich ein Objekt befindet.

Dadurch, dass die Sensoreinrichtung sowohl über die Radar-Sensoreinheit als auch die ToF-Infrarot-Sensoreinheit verfügt, die beide dazu dienen, zu bestimmen, ob sich in dem Detektionsbereich ein Objekt befindet, kann diese Bestimmung mit einer höheren Verlässlichkeit erfolgen. Insbesondere kann in Fällen, in denen eine der beiden Sensoreinheiten nicht in der Lage ist, ein Objekt im Detektionsbereich zu detektieren (beispielsweise aufgrund einer inhärenten Beschränkung des jeweiligen Messprinzips), das Objekt trotzdem noch mit der jeweils anderen Sensoreinheit erkannt werden.

Bevorzugt ist die Sensoreinrichtung ausgebildet, mit der ersten Detektion und der zweiten Detektion festzustellen, dass sich in dem Detektionsbereich kein Objekt befindet, und gemäß dieser Feststellung die Detektionsinformation zu erzeugen, dass sich in dem Detektionsbereich kein Objekt befindet.

Die Sensoreinrichtung erzeugt die Detektionsinformation auf Basis des Radar-Sensorsignals und des ToF-Sensorsignals, beispielsweise durch Fusion dieser beiden Sensorsignale. Als Ausgabe wird also die Detektionsinformation bereitgestellt, die bereits das Radar-Sensorsignal und das ToF-Sensorsignal - und damit beide durchgeführte Detektionen - berücksichtigt, insbesondere kombiniert. Die Detektionsinformation kann als eine für den Anwender oder eine auf Basis der Detektionsinformation operierende externe Steuereinheit einfach zu verstehende bzw. einfach auszuwertende Information bereitgestellt werden, beispielsweise als Präsenz-Information, die (insbesondere nur) anzeigt, ob in dem Detektionsbereich ein Objekt oder kein Objekt vorhanden ist, und/oder (optional) als Freigabe-Information, die dem Anwender oder der externen Steuereinheit eine auf Basis der Detektionen getroffene Entscheidung vorgibt, beispielsweise, dass der Detektionsbereich einen Sperr-Bereich darstellt, in den hinein keine Bewegung erfolgen sollte, oder das der Detektionsbereich einen Freigabe-Bereich darstellt, in den hinein eine Bewegung erfolgen kann.

Vorteilhafte Weiterbildungen sind Gegenstand der Unteransprüche.

Die Erfindung betrifft ferner eine Anordnung, umfassend mehrere kommunikativ miteinander verbundene Sensoreinrichtungen, die jeweils wie die erläuterte Sensoreinrichtung ausgeführt sind.

Die Erfindung betrifft ferner einen Roboter, insbesondere einen Transportroboter, umfassend die Sensoreinrichtung oder die Anordnung.

Die Erfindung betrifft ferner einen stationären Aufbau für die Industrieautomatisierung, umfassend eine stationäre Einrichtung, insbesondere eine Gebäudestruktur und/oder eine stationäre Maschine, sowie die Sensoreinrichtung oder die Anordnung.

Die Erfindung betrifft ferner ein Verfahren zum Betreiben der Sensoreinrichtung, der Anordnung, des Roboters oder des stationären Aufbaus, umfassen die Schritte: Durchführen der ersten Detektion mit der Radar-Sensoreinheit und Erzeugen des Radar-Sensorsignals gemäß der ersten Detektion, Durchführen der zweiten Detektion mit der ToF-Infrarot-Sensoreinheit und Erzeugen des ToF-Sensorsignals gemäß der zweiten Detektion, und Erzeugen, auf Basis des Radar-Sensorsignals und des ToF-Sensorsignals, der Detektionsinformation, die anzeigt, ob sich in dem Detektionsbereich ein Objekt befindet. Vorzugsweise ist das Verfahren gemäß einer der beschriebenen Weiterbildungen der Sensoreinrichtung, der Anordnung, des Roboters oder des stationären Aufbaus ausgestaltet.

Weitere exemplarische Details sowie beispielhafte Ausführungsformen werden nachstehend unter Bezugnahme auf die Figuren erläutert. Dabei zeigt
- Figur 1: eine schematische Ansicht einer Sensoreinrichtung und zwei Objekten,
- Figur 2: eine schematische Ansicht einer Anordnung mit mehreren Sensoreinrichtungen und einer Auswerteeinheit,
- Figur 3: eine schematische Ansicht eines Sensorbands,
- Figur 4: eine schematische Ansicht von oben auf einen Transportroboter mit mehreren Sensoreinrichtungen,
- Figur 5: eine schematische Ansicht von oben auf einen Roboter, und
- Figur 6: eine schematische Ansicht von oben auf einen stationären Aufbau.

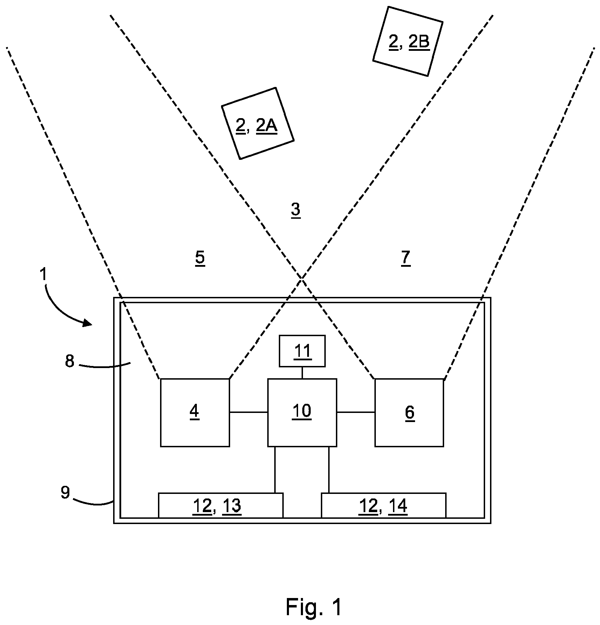

Die Figur 1 zeigt eine schematische Ansicht einer Sensoreinrichtung 1. Die Sensoreinrichtung 1 dient zweckmäßigerweise zum Einsatz in der Industrieautomation.

Die Sensoreinrichtung 1 dient zur Detektion eines Objekts 2, insbesondere eines Kollisionsobjekts, in einem Detektionsbereich 3. Ein zu detektierendes Objekt soll auch als Detektionsobjekt bezeichnet werden. In der Figur 1 sind zwei zu detektierende Objekte 2 gezeigt, die nachstehend als ersten Objekt 2A und zweites Objekt 2B bezeichnet werden sollen. Der besseren Darstellbarkeit halber sind die zu detektierenden Objekte 2 kleiner dargestellt als die Sensoreinrichtung 1. Bevorzugt ist jedes der zu detektierenden Objekte 2 größer als die Sensoreinrichtung 1. Ein Objekt 2 kann beispielsweise ein Hindernis sein, beispielsweise ein auf einem Boden stehendes Objekt. Ferner kann ein Objekt 2 eine Gebäudestruktur, beispielsweise eine Wand sein. Ferner kann ein Objekt 2 eine Person, insbesondere ein Körperteil einer Person, sein. Optional kann ein Objekt 2 ein Fluid sein, insbesondere ein in einem Behälter befindliches Fluid.

Die Sensoreinrichtung 1 umfasst eine Radar-Sensoreinheit 4. Die Radar-Sensoreinheit 4 ist ausgebildet, unter Verwendung von Radar eine erste Detektion durchzuführen, um zu bestimmen, ob sich in dem Detektionsbereich 3 ein Objekt 2 befindet, und gemäß der ersten Detektion ein Radar-Sensorsignal zu erzeugen. Die erste Detektion kann auch als Radar-Detektion bezeichnet werden.

Die Radar-Sensoreinheit 4 verfügt über einen Radar-Detektionsbereich 5, innerhalb dem die Radar-Sensoreinheit 4 das Vorhandensein eines Objekts 2 erkennen kann. Außerhalb des Radar-Detektionsbereichs 5 kann die Radar-Sensoreinheit 4 kein Objekt 2 erkennen. Der Radar-Detektionsbereich 5 ist exemplarisch kegelförmig und weist zweckmäßigerweise einen Öffnungswinkel von kleiner als 100 Grad auf. Der Radar-Detektionsbereich 5 ist insbesondere ein 3D-Bereich. Der Detektionsbereich 3 ist Teil des Radar-Detektionsbereichs 5. Exemplarisch setzt die Radar-Sensoreinheit 4 für die erste Detektion eine Wellenlänge von 5 mm ein. Vorzugsweise setzt die Radar-Sensoreinheit 4 für die erste Detektion einen pulsierten Radar ein.

Zweckmäßigerweise führt die Radar-Sensoreinheit 4 die erste Detektion kontinuierlich durch, so dass die Radar-Sensoreinheit 4 kontinuierlich bestimmt, ob sich in dem Detektionsbereich 3 ein Objekt 2 befindet, und kontinuierlich gemäß der ersten Detektion das Radar-Sensorsignal erzeugt.

Das Radar-Sensorsignal ist zweckmäßigerweise ein digitales Signal. Das Radar-Sensorsignal zeigt zweckmäßigerweise an, ob sich in dem Detektionsbereich 3 ein Objekt 2 befindet. Beispielsweise zeigt das Radar-Sensorsignal an, dass sich in dem Detektionsbereich 3 ein Objekt 2 befindet oder dass sich in dem Detektionsbereich kein Objekt 2 befindet. Vorzugsweise kann das Radar-Sensorsignal anzeigen, dass sich mehrere Objekte 2 in dem Detektionsbereich 3 befinden (für den Fall, dass die Radar-Sensoreinheit 4 bei der ersten Detektion mehrere Objekte 2 in dem Detektionsbereich 3 detektiert). Vorzugsweise umfasst das Radar-Sensorsignal für jedes bei der ersten Detektion detektiertes Objekt 2 eine jeweilige Positionsinformation, die die Position des jeweiligen Objekts 2 anzeigt, insbesondere in Bezug auf die Sensoreinrichtung 1, vorzugsweise in Bezug auf die Radar-Sensoreinheit 4. Die Positionsinformation ist beispielsweise eine Abstandsinformation, die den Abstand von der Radar-Sensoreinheit 4 zu dem jeweiligen Objekt 2 beschreibt.

Die Sensoreinrichtung 1 umfasst eine ToF-Infrarot-Sensoreinheit 6. ToF steht für Time-of-Flight, also für "Laufzeit" oder "Laufzeitverfahren". Die ToF-Infrarot-Sensoreinheit 6 ist ausgebildet, unter Verwendung einer Time-of-Flight-Messung eine zweite Detektion durchzuführen, um zu bestimmen, ob sich in dem Detektionsbereich 3 ein Objekt 2 befindet, und gemäß der zweiten Detektion ein ToF-Sensorsignal zu erzeugen. Die ToF-Infrarot-Sensoreinheit 6 sendet bei der Time-of-Flight-Messung Infrarot aus. Die zweite Detektion kann auch als ToF-Detektion bezeichnet werden.

Die ToF-Infrarot-Sensoreinheit 6 verfügt über einen ToF-Detektionsbereich 7, innerhalb dem die ToF-Infrarot-Sensoreinheit 6 das Vorhandensein eines Objekts 2 erkennen kann. Außerhalb des ToF-Detektionsbereichs 7 kann die ToF-Infrarot-Sensoreinheit 6 kein Objekt 2 erkennen. Der ToF-Detektionsbereich 7 ist exemplarisch kegelförmig und weist zweckmäßigerweise einen Öffnungswinkel von kleiner als 100 Grad auf. Der ToF-Bereich ist insbesondere ein 3D-Bereich. Der Detektionsbereich 3 ist Teil des ToF-Detektionsbereichs 7. Zweckmäßigerweise setzt die ToF-Infrarot-Sensoreinheit 6 für die zweite Detektion eine Wellenlänge von 940 nm ein. Die ToF-Infrarot-Sensoreinheit 6 weist zweckmäßigerweise mehrere Zonen auf, beispielsweise mindestens 4x4 Zonen, mindestens 8x8 Zonen oder genau 8x8 Zonen. Die ToF-Infrarot-Sensoreinheit 6 ist zweckmäßigerweise ausgebildet, für jede Zone eine jeweilige Time-of-Flight-Messung (insbesondere eine jeweilige Abstandsmessung) durchzuführen (insbesondere für die zweite Detektion), insbesondere innerhalb eines jeweiligen Zonen-Detektionsbereich der jeweiligen Zone. Zweckmäßigerweise ergibt sich der ToF-Detektionsbereich 7 als die Gesamtheit der Zonen-Detektionsbereiche der Zonen der ToF-Infrarot-Sensoreinheit 6. Die ToF-Infrarot-Sensoreinheit 6 ist beispielsweise ein Time-of-Flight 8x8 Multizone-Ranging-Sensor.

Zweckmäßigerweise führt die ToF-Infrarot-Sensoreinheit 6 die zweite Detektion kontinuierlich durch, so dass die ToF-Infrarot-Sensoreinheit 6 kontinuierlich bestimmt, ob sich in dem Detektionsbereich 3 ein Objekt 2 befindet, und kontinuierlich gemäß der zweiten Detektion das ToF-Sensorsignal erzeugt.

Das ToF-Sensorsignal ist zweckmäßigerweise ein digitales Signal. Das ToF-Sensorsignal zeigt zweckmäßigerweise an, ob sich in dem Detektionsbereich 3 ein Objekt 2 befindet. Beispielsweise zeigt das Radar-Sensorsignal an, dass sich in dem Detektionsbereich 3 ein Objekt 2 befindet oder dass sich in dem Detektionsbereich kein Objekt 2 befindet. Vorzugsweise kann das ToF-Sensorsignal anzeigen, dass sich mehrere Objekte 2 in dem Detektionsbereich 3 befinden (für den Fall, dass die ToF-Infrarot-Sensoreinheit 6 bei der zweiten Detektion mehrere Objekte 2 in dem Detektionsbereich 3 detektiert). Vorzugsweise umfasst das ToF-Sensorsignal für jedes bei der zweiten Detektion detektiertes Objekt 2 eine jeweilige Positionsinformation, die die Position des jeweiligen Objekts 2 anzeigt, insbesondere in Bezug auf die Sensoreinrichtung 1, vorzugsweise in Bezug auf die ToF-Infrarot-Sensoreinheit 6. Die Positionsinformation umfasst beispielsweise eine Abstandsinformation, die den Abstand von der ToF-Infrarot-Sensoreinheit 6 zu dem jeweiligen Objekt 2 beschreibt, und/oder eine Richtungsinformation, die anzeigt, in welcher Richtung sich das jeweilige Objekt relativ zu der ToF-Infrarot-Sensoreinheit 6 befindet. Optional kann die Positionsinformation eine 2D-Position oder eine 3D-Position jedes (bei der zweiten Detektion detektieren) Objekts 2 im Raum beschreiben, insbesondere in Bezug auf die Sensoreinrichtung 1, vorzugsweise in Bezug auf die ToF-Infrarot-Sensoreinheit 6.

Der Detektionsbereich 3 ist zweckmäßigerweise derjenige Bereich, in dem sich der Radar-Detektionsbereich 5 und der ToF-Detektionsbereich 7 überlappen. Zweckmäßigerweise sind die Radar-Sensoreinheit 4 und die ToF-Infrarot-Sensoreinheit 6 derart angeordnet und/oder ausgerichtet, dass sich der Radar-Detektionsbereich 5 und der ToF-Detektionsbereich 7 überlappen. Vorzugsweise ist der Detektionsbereich 3 ein Umgebungsbereich der Sensoreinrichtung 1. Der Detektionsbereich 3 liegt also insbesondere außerhalb der Sensoreinrichtung 1. Der Detektionsbereich 3 ist insbesondere ein 3D-Detektionsbereich. Vorzugsweise weist der Detektionsbereich 3 einen Sichtwinkel von 60 Grad auf und/oder erstreckt sich (in Richtung weg von der Sensoreinrichtung) über wenigstens 2 m oder wenigstens 4 m und/oder maximal 10 m.

Bevorzugt sind die Radar-Sensoreinheit 4 und/oder die ToF-Infrarot-Sensoreinheit 6 jeweils als Chip ausgeführt. Die Radar-Sensoreinheit 4 und die ToF-Infrarotsensoreinheit 6 weisen exemplarisch einen maximalen Abstand von weniger als 5 cm, weniger als 2 cm oder weniger als 1 cm zueinander auf.

Optional können die Radar-Sensoreinheit 4, die ToF-Infrarot-Sensoreinheit 6 und die Rechnereinheit 10 auf einem Chip integriert sein, und beispielsweise zusammen als System-on-a-Chip ausgeführt sein.

Die Sensoreinrichtung 1 ist zweckmäßigerweise ausgebildet, die erste Detektion und/oder die zweite Detektion und/oder eine Erzeugung einer Detektionsinformation wiederholt, insbesondere periodisch durchzuführen, beispielsweise mit einer Rate von größer als 1 Hz oder größer als 10 Hz, exemplarisch mit einer Rate von 15 Hz.

Bevorzugt umfasst die Sensoreinrichtung 1 ferner eine Leiterplatte 8, auf der die Radar-Sensoreinheit 4 und die ToF-Infrarot-Sensoreinheit 6 angeordnet sind. Die Radar-Sensoreinheit 4 und die ToF-Infrarot-Sensoreinheit 6 sind also bevorzugt auf derselben Leiterplatte 8 angeordnet, insbesondere auf derselben Seite der Leiterplatte 8. Bevorzugt ist die flächenmäßig größte Seite der Leiterplatte maximal 10 cm mal 10 cm groß, insbesondere maximal 5 cm mal 5 cm groß. Insbesondere sind beide Abmessungen der flächenmäßig größten Seite jeweils maximal 5 cm lang. Die flächenmäßig größte Seite ist exemplarisch diejenige Seite, auf der die Radar-Sensoreinheit 4 und die ToF-Infrarot-Sensoreinheit 6 angeordnet sind.

Gemäß einer rein optionalen Ausgestaltung umfasst die Leiterplatte 8 einen ersten Leiterplatten-Abschnitt, auf dem die Radar-Sensoreinheit 4 angeordnet ist, und einen zweiten Leiterplatten-Abschnitt, auf dem die ToF-Infrarot-Sensoreinheit 6 angeordnet ist. Optional ist der erste Leiterplatten-Abschnitt relativ zu dem zweiten Leiterplatten-Abschnitt angewinkelt, um die Überlappung zwischen dem Radar-Detektionsbereich 5 und dem ToF-Detektionsbereich 7 zu definieren. Die Anwinkelung des ersten Leiterplatten-Abschnitts zum zweiten Leiterplatten-Abschnitt wird beispielsweise durch eine entsprechende Krümmung der Leiterplatte 8 erzielt.

Die Sensoreinrichtung 1 umfasst eine Rechnereinheit 10. Die Rechnereinheit 10 ist beispielsweise als Microcontroller ausgeführt und insbesondere auf der Leiterplatte 8 angeordnet. Die Rechnereinheit 10 ist kommunikativ mit der Radar-Sensoreinheit 4 verbunden, um das Radar-Sensorsignal zu empfangen. Die Rechnereinheit 10 ist ferner kommunikativ mit der ToF-Infrarot-Sensoreinheit 4 verbunden, um das Radar-Sensorsignal zu empfangen. Die Rechnereinheit 10 ist ausgebildet, auf Basis des Radar-Sensorsignals und des ToF-Sensorsignals die Detektionsinformation zu erzeugen, insbesondere zu berechnen. Die Detektionsinformation zeigt an, ob sich in dem Detektionsbereich ein Objekt befindet. Vorzugsweise ist die Sensoreinrichtung 1 ausgebildet, die Detektionsinformation wiederholt, insbesondere periodisch zu erzeugen, und zwar insbesondere auf Basis des jeweils aktuellen Radar-Sensorsignals und des jeweils aktuellen ToF-Sensorsignals.

Die Sensoreinrichtung 1 ist vorzugsweise als Sensormodul ausgebildet. Die Sensoreinrichtung 1 ist vorzugsweise derart dimensioniert, dass sie mit einer einzelnen Hand umgriffen und getragen werden kann. Bevorzugt sind die beiden größten Abmessungen der (gesamten) Sensoreinrichtung 1 jeweils kleiner als 10 cm, insbesondere jeweils kleiner als 5 cm.

Die Sensoreinrichtung 1 umfasst zweckmäßigerweise ein Gehäuse 9, das insbesondere das Außengehäuse der Sensoreinrichtung 1 darstellt. Im Gehäuse 9 ist insbesondere die Radar-Sensoreinheit 4, die ToF-Infrarot-Sensoreinheit 6, die Leiterplatte 8, und/oder die Rechnereinheit 10 angeordnet.

Rein optional verfügt die Sensoreinrichtung 1 über eine Leuchteinheit 11, insbesondere eine LED. Die Leuchteinheit 11 kann beispielsweise auf der Leiterplatte 8 oder an dem Gehäuse 9, insbesondere außen an dem Gehäuse 9, befestigt sein. Die Leuchteinheit 11 wird zweckmäßigerweise von der Rechnereinheit 10 angesteuert. Die Sensoreinrichtung 1 ist vorzugsweise ausgebildet, mit der Leuchteinheit 11 ein Signal, insbesondere ein Warnsignal, auszugeben, und/oder eine Ausleuchtung eines Ausleuchtungsbereichs durchzuführen. Der Ausleuchtungsbereich ist zweckmäßigerweise ein Umgebungsbereich der Sensoreinrichtung 1, beispielsweise ein Bereich, in den die Sensoreinrichtung 1 (beispielsweise als Teil eines Roboters) bewegt wird. Der Ausleuchtungsbereich kann den Detektionsbereich 3 umfassen.

Bevorzugt ist die Sensoreinrichtung 1 ausgebildet, die Leuchteinheit 11 auf Basis des Radar-Sensorsignals, des ToF-Sensorsignals und/oder der Detektionsinformation anzusteuern. Beispielsweise ist die Sensoreinrichtung 1 ausgebildet, in Ansprechen darauf, dass das Radar-Sensorsignal, das ToF-Sensorsignal und/oder die Detektionsinformation anzeigen, dass sich in dem Detektionsbereich 3 ein Objekt 2 befindet, mit der Leuchteinheit 11 aufzuleuchten, insbesondere um dadurch ein visuelles Warnsignal auszugeben und/oder um das in dem Detektionsbereich 3 befindliche Objekt 2 anzuleuchten.

Bevorzugt umfasst die Sensoreinrichtung 1 eine Kommunikations-Schnittstelle 12. Die Kommunikations-Schnittstelle 12 ist insbesondere als Busschnittstelle ausgeführt, vorzugsweise für den CAN-Bus. Vorzugsweise ist die Sensoreinrichtung 1 ausgebildet, über die Kommunikations-Schnittstelle 12 auf Basis des CAN-Bus zu kommunizieren, beispielsweise mit einer weiteren Sensoreinrichtung (die insbesondere wie die Sensoreinrichtung 1 ausgeführt ist) und/oder mit einer externen Steuereinheit. Die Kommunikations-Schnittstelle 12 dient insbesondere zur Bereitstellung der Detektionsinformation. Zweckmäßigerweise ist die Sensoreinrichtung 1, insbesondere die Rechnereinheit 10, ausgebildet, über die Kommunikations-Schnittstelle 12 die Detektionsinformation auszugeben, insbesondere an eine externe Steuereinheit. Die Kommunikations-Schnittstelle 12 ist zweckmäßigerweise auf der Leiterplatte 8 und/oder an dem Gehäuse 9 angeordnet.

Bevorzugt weist die Kommunikations-Schnittstelle einen ersten Kommunikationsanschluss 13 und/oder einen zweiten Kommunikationsanschluss 14 auf, über die die Sensoreinrichtung 1 zweckmäßigerweise mit weiteren (insbesondere identischen) Sensoreinrichtungen verbindbar ist, um mit diesen beispielsweise eine Reihenschaltung zu bilden. Mehrere identische Sensoreinrichtungen 1 (und optional eine externe Steuereinheit) sind über die jeweiligen Kommunikationsanschlüsse 13, 14 miteinander verbindbar, um einen Bus, insbesondere einen CAN-Bus, zu bilden. Der gebildete Bus kann beispielsweise eine Ringbus-Topologie aufweisen.

Der erste Kommunikationsanschluss 13 und/oder der zweite Kommunikationsanschluss 14 ist zweckmäßigerweise als Kabelanschluss, insbesondere als Anschluss für ein jeweiliges Flachbandkabel, ausgeführt.

Im Folgenden soll näher auf die Detektionsinformation eingegangen werden:
Die Detektionsinformation kann beispielsweise eine Präsenz-Information umfassen oder darstellen. Die Präsenz-Information kann beispielsweise einen ersten Zustand annehmen, der anzeigt, dass in dem Detektionsbereich 3 ein Objekt 2 (oder mehrere Objekte 2) vorhanden sind, und kann zweckmäßigerweise einen zweiten Zustand annehmen, der anzeigt, dass in dem Detektionsbereich 3 kein Objekt 2 vorhanden ist. Die Präsenz-Information kann beispielsweise eine binäre Information sein.

Die Detektionsinformation kann beispielsweise eine Freigabe-Information umfassen oder darstellen. Die Freigabe-Information dient beispielsweise als Freigabesignal, das eine (von der Sensoreinrichtung 1) vorgenommene Safety-Bewertung darstellt. Die Freigabe-Information kann beispielsweise einen ersten Zustand annehmen, der anzeigt, dass keine Freigabe für den Detektionsbereich 3 (beispielsweise für eine Bewegung in Richtung des Detektionsbereichs 3) vorliegt und/oder einen zweiten Zustand, der anzeigt, dass eine Freigabe für den Detektionsbereich 3 (beispielsweise für eine Bewegung in Richtung des Detektionsbereichs 3) vorliegt. Beispielsweise erzeugt die Sensoreinrichtung 1 die Freigabeinformation mit dem zweiten Zustand in Ansprechen darauf, dass kein Objekt 2 in dem Detektionsbereich 3 detektiert wurde oder in Ansprechen darauf, dass der Abstand eines in dem Detektionsbereich 3 detektierten Objekts 2 zu der Sensoreinrichtung 1 größer ist als ein vorbestimmter Abstands-Schwellenwert.

Die Detektionsinformation kann beispielsweise eine Positions-Information umfassen oder darstellen. Die Positions-Information zeigt eine Position eines in dem Detektionsbereich 3 befindlichen Objekts 2 an. Zweckmäßigerweise zeigt die Positions-Information die Position jedes in dem Detektionsbereich 3 befindlichen Objekts 2 an. Beispielsweise ist in der Positionsinformation jede Position eines jeweiligen Objekts 2 als Abstand (zur Sensoreinrichtung 1) und/oder Richtung (in Bezug auf die Sensoreinrichtung 1) und/oder als 3D-Position definiert.

Die Positions-Information kann optional von einer externen Steuereinheit zur Lokalisierung und/oder Kartographie genutzt werden. Beispielsweise kann die externe Steuereinheit ausgebildet sein, zu detektieren, dass die durch die Positions-Information angezeigten Objekte Referenz-Objekten entsprechen, die in einer Referenz-Lokalisierungsinformation enthalten sind, und auf Basis dieser Detektion (und einer in der Referenz-Lokalisierungsinformation definierten Referenz-Positions-Information) eine Position der Sensoreinrichtung 1 ermitteln. Ferner kann die externe Steuereinheit ausgebildet sein, die Positions-Information zu verwenden, um eine Referenz-Lokalisierungsinformation - also beispielsweise eine digitale Karte, in der die Objekte 2 mit ihren Positionen hinterlegt sind - zu erzeugen.

Die Detektionsinformation kann optional eine Füllstandsinformation umfassen oder darstellen, die einen Füllstand eines in dem Detektionsbereich 3 befindlichen Fluids anzeigt.

Die Detektionsinformation kann vorzugsweise eine Materialinformation umfassen, die ein Material und/oder eine Materialklasse eines in dem Detektionsbereich 3 befindlichen Objekts 2 anzeigt. Zweckmäßigerweise kann die Materialinformation für jedes detektierte Objekt 2 ein jeweiliges Material und/oder eine jeweilige Materialklasse anzeigen.

Die Detektionsinformation kann insbesondere Folgendes anzeigen: wie viele Objekte 2 in dem Detektionsbereich 3 detektiert wurden, die Position jedes detektierten Objekts 2, eine Eigenschaft jedes detektierten Objekts 2 und/oder das Material und/oder die Materialklasse jedes detektierten Objekts. Vorzugsweise kann die Detektionsinformation ferner eine Plausibilität für jedes detektierte Objekt 2 anzeigen. Die Plausibilität ist beispielweise eine Wahrscheinlichkeit, dass das jeweilige detektierte Objekt 2 tatsächlich vorhanden ist oder das in dem Detektionsbereich 3 tatsächlich kein Objekt 2 vorhanden ist. Zweckmäßigerweise kann die Detektionsinformation ferner eine Zusatzinformation umfassen, die anzeigt, dass zusätzlich zu den von der Detektionsinformation angezeigten detektierten Objekten 2 kein weiteres Objekt in dem Detektionsbereich 3 vorhanden ist.

Nachstehend soll näher darauf eingegangen werden, wie die Rechnereinheit 10 auf Basis des Radar-Sensorsignals und des ToF-Sensorsignals die Detektionsinformation erzeugt.

Bevorzugt ist die Rechnereinheit 10 ausgebildet, auf Basis des Radar-Sensorsignals eine Plausibilisierung des ToF-Sensorsignals, insbesondere der zweiten Detektion, durchzuführen. Ferner kann die Rechnereinheit 10 ausgebildet sein, auf Basis des ToF-Sensorsignals eine Plausibilisierung des Radar-Sensorsignals, insbesondere der ersten Detektion, durchzuführen. Die Rechnereinheit 10 ist ausgebildet, die Detektionsinformation gemäß der Plausibilisierung zu erzeugen. Die Plausibilisierung ist zweckmäßigerweise eine Verifikation. Die Rechnereinheit 10 führt die Plausibilisierung beispielsweise dadurch durch, dass die Rechnereinheit 10 prüft, ob das Radar-Sensorsignal und das ToF-Sensorsignal beide die gleiche Anzahl von in dem Detektionsbereich 3 detektierten Objekten 2 anzeigen. Die Anzahl kann insbesondere auch null sein.

Beispielsweise umfasst die Detektionsinformation eine Plausibilisierungsinformation, die die Plausibilisierung anzeigt. Zweckmäßigerweise erzeugt die Rechnereinheit 10 in Ansprechen darauf, dass das Radar-Sensorsignal und das ToF-Sensorsignal beide die gleiche Anzahl von in dem Detektionsbereich 3 detektierten Objekten 2 anzeigen, eine Plausibilisierungsinformation, die anzeigt, dass die (von der Detektionsinformation angezeigte Bestimmung, ob sich in dem Detektionsbereich 3 ein Objekt 2 befindet) plausibel ist. Zweckmäßigerweise erzeugt die Rechnereinheit 10 in Ansprechen darauf, dass das Radar-Sensorsignal und das ToF-Sensorsignal nicht die gleiche Anzahl von in dem Detektionsbereich 3 detektierten Objekten 2 anzeigen, eine Plausibilisierungsinformation, die anzeigt, dass die (von der Detektionsinformation angezeigte Bestimmung, ob sich in dem Detektionsbereich 3 ein Objekt 2 befindet) nicht plausibel ist.

Beispielsweise ist die Rechnereinheit 10 ausgebildet, zu prüfen, ob sowohl das Radar-Sensorsignal wie auch das ToF-Sensorsignal anzeigen, dass sich in dem Detektionsbereich 3 kein Objekt befindet, und nur dann, wenn dies der Fall ist, mit der Detektionsinformation anzuzeigen, dass sich in dem Detektionsbereich 3 kein Objekt befindet.

Beispielsweise ist die Rechnereinheit 10 ausgebildet, in Ansprechen darauf, dass eines aus dem Radar-Sensorsignal und dem ToF-Sensorsignal anzeigt, dass sich in dem Detektionsbereich 3 ein Objekt 2 befindet, zu prüfen, ob das andere aus dem Radar-Sensorsignal und dem ToF-Sensorsignal anzeigt, dass sich in dem Detektionsbereich zusätzlich zu dem Objekt ein weiteres Objekt befindet, und, falls das nicht der Fall ist, in der Detektionsinformation anzugeben, dass zusätzlich zu dem Objekt kein weiteres Objekt in dem Detektionsbereich 3 vorhanden ist.

Bevorzugt ist die Rechnereinheit 10 ausgebildet, auf Basis des Radar-Sensorsignals und/oder des ToF-Sensorsignals zu erkennen, dass ein in dem Detektionsbereich 3 befindliches Objekt 2 ein für die Detektionsinformation zu ignorierendes Objekt 2, beispielsweise ein Boden, ist.

Optional können das Radar-Sensorsignal und/oder das ToF-Sensorsignal eine jeweilige Qualitätsinformation umfassen, die beispielsweise anzeigt, wie verlässlich die dem jeweiligen Signal zugrunde liegende Detektion ist. Zweckmäßigerweise ist die Rechnereinheit 10 ausgebildet, bei der Erzeugung der Detektionsinformation die Qualitätsinformation zu berücksichtigen, insbesondere durch eine entsprechende Gewichtung des Radar-Sensorsignals und/oder des ToF-Sensorsignals.

Vorzugsweise ist die Radar-Sensoreinheit 4 ausgebildet, die Position des Objekts 2 mit einer ersten Genauigkeit zu detektieren und die ToF-Infrarot-Sensoreinheit 6 ist ausgebildet, die Position des Objekts 2 mit einer zweiten Genauigkeit zu detektieren, die höher ist als die erste Genauigkeit. Mit der Position ist in diesem Zusammenhang insbesondere die Richtung gemeint; d.h. die genannten Genauigkeiten beziehen sich insbesondere auf die Richtung des Objekts 2 in Bezug auf die Sensoreinrichtung 1. Die Genauigkeiten sind beispielsweise Richtungs-Auflösungen. Mit der Radar-Sensoreinheit 4 kann die Richtung des Objekts 2 beispielsweise nur insoweit bestimmt werden, als dass das Objekt 2 innerhalb des Detektionsbereichs 3 liegt (dessen Richtung bekannt ist). Mit der ToF-Infrarot-Sensoreinheit 6 ist zweckmäßigerweise eine Richtungsbestimmung des Objekts 2 mit einer höheren Auflösung als dem Detektionsbereich 3 möglich. Die Rechnereinheit 10 ist zweckmäßigerweise ausgebildet, die Positionsinformation auf Basis der mit der ToF-Infrarot-Sensoreinheit detektierten Position (insbesondere auf Basis der mit der ToF-Infrarot-Sensoreinheit detektierten Richtung des Objekts 2) zu erzeugen.

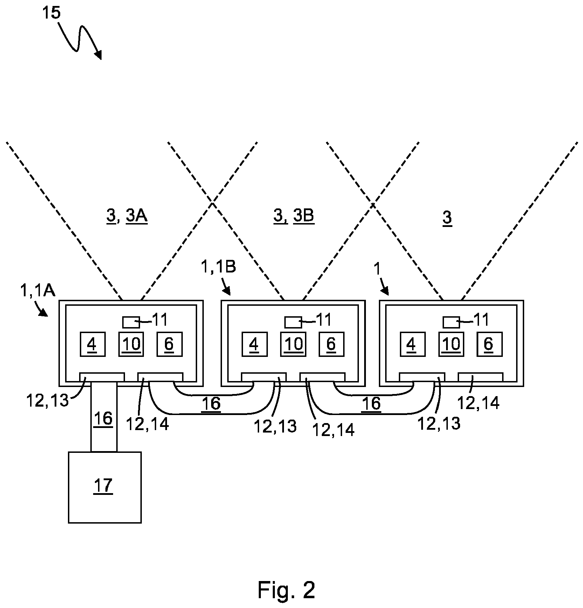

Die Figur 2 zeigt eine Anordnung 15, die mehrere Sensoreinrichtungen 1 umfasst. Jede Sensoreinrichtung 1 ist zweckmäßigerweise wie vorstehend erläutert ausgeführt. Die Sensoreinrichtungen 1 sind kommunikativ miteinander verbunden, insbesondere über ihre Kommunikations-Schnittstellen 12. Exemplarisch bilden die Sensoreinrichtungen 1 eine Reihenschaltung. Die Sensoreinrichtungen 1 sind exemplarisch über Kabel 16, insbesondere Flachbandkabel, kommunikativ miteinander verbunden. In der Reihenschaltung benachbarte Sensoreinrichtungen 1 sind jeweils über ein jeweiliges Kabel 16 kommunikativ miteinander verbunden, wobei das jeweilige Kabel 16 jeweils von dem zweiten Kommunikationsanschluss 14 der in der Reihenschaltung weiter vorne angeordneten Sensoreinrichtung 1 zu dem ersten Kommunikationsanschluss 13 der in der Reihenschaltung weiter hinten angeordneten Sensoreinrichtung 1 verläuft.

Bevorzugt umfasst die Anordnung 15 ferner eine Auswerteeinheit 17, die insbesondere als Steuereinheit ausgeführt ist, beispielsweise eines Roboters. Die Auswerteeinheit 17 ist (in Bezug auf die Sensoreinrichtungen 1) insbesondere eine externe Auswerteeinheit. Der Begriff "extern" soll in diesem Zusammenhang zum Ausdruck bringen, dass die Auswerteeinheit 17 nicht Teil einer der Sensoreinrichtungen 1 ist, sondern stattdessen extern in Bezug auf die Sensoreinrichtungen 1 angeordnet ist. Die externe Auswerteeinheit ist beispielsweise eine externe Steuereinheit.

Exemplarisch bildet die Auswerteeinheit 17 zusammen mit den Sensoreinrichtungen 1 eine Reihenschaltung. Exemplarisch ist die Auswerteeinheit 17 über ein Kabel 16 mit dem ersten Kommunikationsanschluss 13 einer der Sensoreinrichtungen verbunden. Die Auswerteeinheit 17 und die Sensoreinrichtungen 1 bilden zweckmäßigerweise einen Bus. Die Auswerteeinheit 17 ist zweckmäßigerweise ausgebildet, von jeder der Sensoreinrichtungen 1 die jeweils ausgegebene Detektionsinformation zu empfangen. Die Detektionsinformation ist zweckmäßigerweise wie vorstehend erläutert ausgeführt und kann insbesondere auch die Plausibilitätsinformation enthalten. Jeder Sensoreinrichtung 1 ist ein jeweiliger Detektionsbereich 3 zugehörig. Die Auswerteeinheit 17 ist zweckmäßigerweise ausgebildet, auf Basis der empfangenen Detektionsinformationen die Detektionsbereiche 3 jeweils als Freigabebereiche - also insbesondere Bereiche, in die eine Bewegung erlaubt ist - oder als Sperrbereiche - also insbesondere Bereiche, in die keine Bewegung erlaubt ist, zu registrieren.

Exemplarisch umfassen die Sensoreinrichtungen 1 eine erste Sensoreinrichtung 1A und eine zweite Sensoreinrichtung 1B. Die Auswerteeinheit 17 ist zweckmäßigerweise ausgebildet, eine erste Detektionsinformation von der ersten Sensoreinrichtung 1A und eine zweite Detektionsinformation von der zweiten Sensoreinrichtung 1B zu empfangen und die erste Detektionsinformation auf Basis der zweiten Detektionsinformation zu plausibilisieren.

Der Detektionsbereich 3 der ersten Sensoreinrichtung 1A soll als erster Detektionsbereich 3A bezeichnet werden und der Detektionsbereich 3 der zweiten Sensoreinrichtung 1B soll als zweiter Detektionsbereich 3B bezeichnet werden. Zweckmäßigerweise überlappt der erste Detektionsbereich 3A mit dem zweiten Detektionsbereich 3B, und zwar gemäß einer bevorzugten Ausgestaltung zu einem höheren Grad als in der Figur 2 gezeigt, beispielsweise zu wenigstens 70 Prozent, wenigstens 80 Prozent oder wenigstens 90 Prozent oder vollständig.

Die von der Auswerteeinheit 17 durchgeführte Plausibilisierung erfolgt beispielsweise dadurch, dass die Auswerteeinheit 17 die erste Detektionsinformation mit der zweiten Detektionsinformation vergleicht, und beispielsweise in Ansprechen darauf, dass die erste Detektionsinformation mit der zweiten Detektionsinformation übereinstimmt, die erste Detektionsinformation und/oder die zweite Detektionsinformation als gültig registriert, und zweckmäßigerweise in Ansprechen darauf, dass die erste Detektionsinformation von der zweiten Detektionsinformation abweicht, die erste Detektionsinformation und/oder die zweite Detektionsinformation als ungültig registriert.

Zweckmäßigerweise ist die Auswerteeinheit 17 ausgebildet, einen gemeinsamen Detektionsbereich, in dem die beiden Sensoreinrichtungen 1A, 1B detektieren, ob sich dort ein Objekt 2 befindet, nur dann als Freigabebereich zu registrieren, wenn beide Sensoreinrichtungen 1A, 1B kein Objekt in diesem gemeinsamen Detektionsbereich detektieren. Der gemeinsame Detektionsbereich ist insbesondere der Überlappungsbereich der beiden Detektionsbereiche 3A, 3B der beiden Sensoreinrichtungen 1A, 1B.

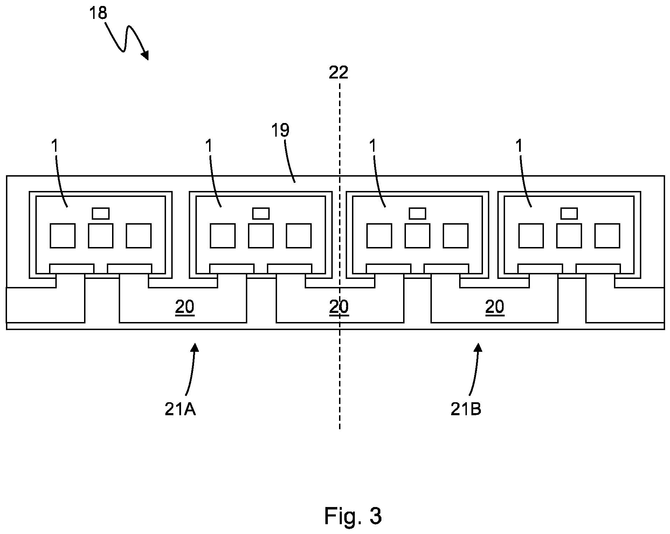

Die Figur 3 zeigt eine Anordnung 18, die insbesondere wie die vorstehend erläuterte Anordnung 15 ausgebildet sein kann. Die Anordnung 18 umfasst mehrere Sensoreinrichtungen 1, die kommunikativ miteinander verbunden sind. Beispielsweise bilden die Sensoreinrichtungen 1 eine Reihenschaltung.

Die Anordnung 18 umfasst ein Trägerband 19, auf dem die Sensoreinrichtungen 1 in Richtung des Bandverlaufs des Trägerbands 19 hintereinander angeordnet sind, um ein Sensorband zu bilden. Das Trägerband 19 ist beispielsweise als Klebestreifen ausgeführt. Zweckmäßigerweise umfasst die Anordnung 18 eine Mehrzahl an Verbindungsabschnitten 20, die insbesondere auf dem Trägerband 19 angeordnet sind oder Teil des Trägerbands 19 sind. Als Sensorband soll insbesondere der Verbund aus dem Trägerband 19 und den auf dem Trägerband 19 angeordneten Sensoreinrichtungen 1 (und vorzugsweise den Verbindungsabschnitten 20) bezeichnet werden. Jeder Verbindungsabschnitt 20 umfasst eine oder mehrere elektrische Leitungen. In Richtung des Bandverlaufs benachbarte Sensoreinrichtungen 1 sind jeweils über einen jeweiliges Verbindungsabschnitt 20 kommunikativ miteinander verbunden, wobei der jeweilige Verbindungsabschnitt 20 jeweils von dem zweiten Kommunikationsanschluss 14 der in Richtung des Bandverlaufs weiter vorne angeordneten Sensoreinrichtung 1 zu dem ersten Kommunikationsanschluss 13 der in Richtung des Bandverlaufs weiter hinten angeordneten Sensoreinrichtung 1 verläuft.

Bevorzugt ist das Sensorband in Richtung des Bandverlaufs aufteilbar, um wenigstens zwei funktionierende Sensorband-Teile 21A, 21B zu erhalten. Beispielsweise kann das Sensorband durch eine Auftrennung 22, insbesondere einen Schnitt, quer zur Richtung des Bandverlaufs in die beiden Sensorband-Teile 21A, 21B aufgeteilt werden. Die Auftrennung 22 verläuft zweckmäßigerweise zwischen zwei in Richtung des Bandverlaufs benachbarten Sensoreinrichtungen 1 und insbesondere durch einen Verbindungsabschnitt 20. Mit dem Ausdruck "funktionierender Sensorband-Teil" soll insbesondere gemeint sein, dass bei diesem Sensorband-Teil die Detektionsinformationen von sämtlichen dem Sensorband-Teil zugehörigen Sensoreinrichtungen 1 empfangen werden können, insbesondere über den verbleibenden Teil desjenigen Verbindungsabschnitts 20, durch den die Auftrennung 22 verläuft.

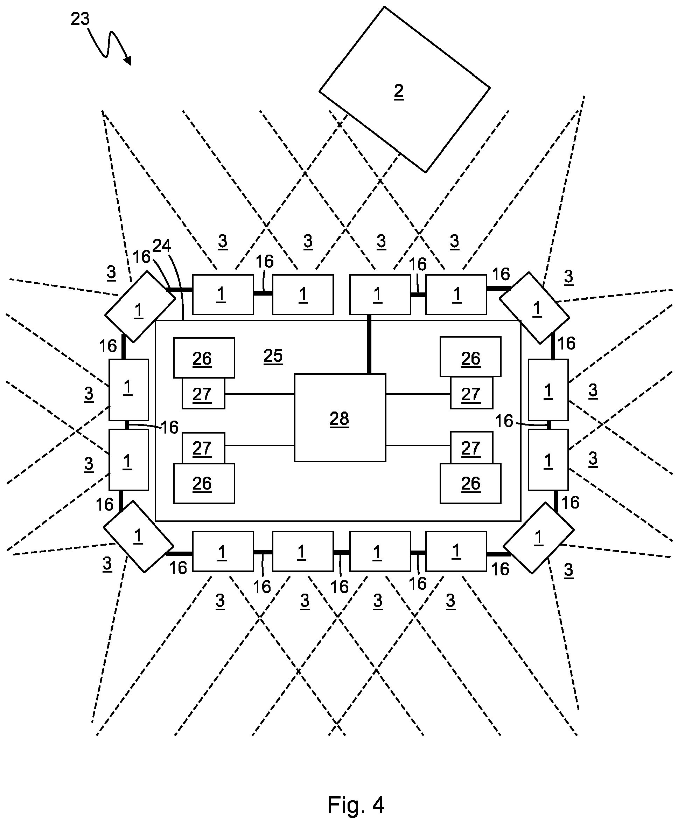

Die Figur 4 zeigt einen Roboter 23, der exemplarisch als Transportroboter ausgeführt ist. Der Roboter 23 ist beispielsweise ein industrieller Transportroboter, insbesondere um innerhalb eines Gebäudes Transportgüter zu transportieren. Der Roboter 23 umfasst wenigstens eine Sensoreinrichtung 1 (die insbesondere wie vorstehend erläutert ausgeführt ist).

Der Roboter 23 verfügt über einen Roboterkörper 24, der beispielsweise eine quaderförmige Grundgestalt und/oder einen quaderförmigen Transportabschnitt aufweist. Der Roboterkörper 24 verfügt zweckmäßigerweise über eine Ladefläche 25, die mit einem oder mehreren Transportgütern beladen werden kann, um die Transportgüter mit dem Roboter 23 zu transportieren. Die Ladefläche 25 ist zweckmäßigerweise auf der Oberseite des Roboterkörpers 24 oder der Oberseite des Transportabschnitts angeordnet.

Der Roboter 23 verfügt exemplarisch über mehrere Räder 26, mit denen sich der Roboter 23 gegenüber einem Boden abstützt und sich relativ zum Boden fortbewegen kann. Die Räder 26 sind exemplarisch an dem Roboterkörper 24, insbesondere einer Unterseite des Roboterkörpers 24, angeordnet. Bevorzugt verfügt der Roboter 23 über eine Antriebseinrichtung 27 zum Antrieb der Räder 26. Die Antriebseinrichtung 27 umfasst beispielsweise einen oder mehrere Elektromotoren zum Antrieb der Räder 26, um den Roboter 23 relativ zum Boden in Bewegung zu versetzen.

Zweckmäßigerweise verfügt der Roboter 23 ferner über eine Steuereinheit 28, die insbesondere ausgebildet ist, die Antriebseinrichtung 27 anzusteuern, um den Antrieb der Räder 26 zu bewirken. Die Steuereinheit 28 ist insbesondere ein Beispiel einer vorstehend genannten externen Steuereinheit. Zweckmäßigerweise ist durch die Ansteuerung der Antriebseinrichtung 27 eine Bewegungsrichtung des Roboters 23 festlegbar, beispielsweise durch ein Lenken der Räder 26. Ferner können die Räder als omnidirektionale Räder, insbesondere als Mecanum-Räder, ausgeführt sein, so dass eine Bewegungsrichtung des Roboters 23 durch einen Drehantrieb der Räder (um ihre jeweilige Radachse) festlegbar ist.

Der Roboter 23 verfügt ferner über eine Mehrzahl an miteinander kommunikativ verbundenen Sensoreinrichtungen 1, die exemplarisch mit der Steuereinheit 28 kommunikativ verbunden sind. Bevorzugt bilden die Sensoreinrichtungen 1 zusammen mit der Steuereinheit 28 die vorstehend erläuterte Anordnung 15, wobei die Steuereinheit 28 als die Auswerteeinheit 17 dient - also insbesondere wie die Auswerteeinheit 17 ausgeführt ist. Ferner kann die Mehrzahl an Sensoreinrichtungen 1 die vorstehend erläuterte Anordnung 18 bilden. Insbesondere kann das Sensorband den Roboter 23, insbesondere den Roboterkörper 24, umlaufen.

Exemplarisch umfasst der Roboter 23 wenigstens 10, wenigstens 15 oder wenigstens 20 Sensoreinrichtungen 1. Die Sensoreinrichtungen 1 sind insbesondere wie vorstehend erläutert ausgeführt.

Die Sensoreinrichtungen 1 sind exemplarisch an dem Roboterkörper 24 angeordnet. Zweckmäßigerweise definieren die Sensoreinrichtungen 1 zusammen eine Bahn, die den Roboterkörper 24, insbesondere eine (gedachte) vertikale Achse des Roboterkörpers 24, umläuft, wobei die Sensoreinrichtungen 1 in Richtung der Bahn nacheinander angeordnet sind. Die Sensoreinrichtungen 1 sind zweckmäßigerweise um den äußeren Rand des Roboterkörpers 24 und/oder der Ladefläche 25 herum angeordnet.

Bevorzugt bilden die Detektionsbereiche 3 der Sensoreinrichtungen 1 zusammen einen Gesamt-Detektionsbereich von wenigstens 100 Grad, wenigstens 180 Grad, wenigstens 270 Grad oder von 360 Grad, insbesondere in Bezug auf eine (gedachte) vertikale Achse des Roboters 23 und/oder innerhalb einer horizontalen Ebene.

Bevorzugt decken die Detektionsbereiche 3 der Sensoreinrichtungen 1 zusammen den gesamten Bewegungsbereich, beispielsweise einen horizontalen Bewegungsbereich, des Roboters 23 ab. Als Bewegungsbereich soll insbesondere derjenige Bereich bezeichnet werden, in den sich der Roboter 23 aus seiner aktuellen Position heraus bewegen kann, insbesondere durch einen Antrieb der Räder 26.

Zweckmäßigerweise sind die Detektionsbereiche 3 jeweils in eine von dem Roboterkörper 24 abgewandte Richtung gerichtet. Zweckmäßigerweise decken die Detektionsbereiche 3 die gesamte (insbesondere horizontale) Peripherie des Roboters 23 ab. Bevorzugt überlappen sich die Detektionsbereiche 3 von benachbarten Sensoreinrichtungen 1.

Exemplarisch bilden die Steuereinheit 28 und die Sensoreinrichtungen 1 eine Reihenschaltung. Ferner können die Steuereinheit 28 und die Sensoreinrichtungen 1 eine Ringbus-Topologie bilden. Exemplarisch sind (entlang der durch die Sensoreinrichtungen 1 definierten Bahn) benachbarte Sensoreinrichtungen 1 jeweils über ein jeweiliges Kabel 16, insbesondere ein Flachbandkabel, miteinander verbunden. Die Steuereinheit 28 und die Sensoreinrichtungen 1 bilden zweckmäßigerweise zusammen einen Bus, insbesondere einen CAN-Bus. Vorzugsweise empfängt die Steuereinheit 28 Detektionsinformationen von sämtlichen Sensoreinrichtungen 1, insbesondere über den Bus.

Bevorzugt ist der Roboter 23 ausgebildet, auf Basis der Detektionsinformation eine Bewegung des Roboters 23 zu beginnen, zu ändern oder zu stoppen, insbesondere durch eine Ansteuerung der Antriebseinrichtung 27 durch die Steuereinheit 28. Insbesondere ist der Roboter 23 ausgebildet, sich auf Basis der Detektionsinformation derart zu bewegen, dass keine Kollision mit einem detektierten Objekt 2 erfolgt. Optional ist der Roboter 23 ausgebildet, auf Basis einer Detektionsinformation, die einen Widerspruch zwischen der ersten Detektion und der zweiten Detektion anzeigt (insbesondere in Bezug auf die Bestimmung, ob sich in dem Detektionsbereich 3 ein Objekt 2 befindet), die Bewegung des Roboters 23 zu stoppen.

Der Roboter 23, insbesondere die Steuereinheit 28, ist insbesondere ausgebildet, von jeder Sensoreinrichtung 1 eine jeweilige Detektionsinformation zu erhalten und auf Basis der erhaltenen Detektionsinformationen Freigabebereiche zu definieren, in die eine Bewegung des Roboters 23 zulässig ist, und/oder auf Basis der erhaltenen Detektionsinformationen Sperrbereiche zu definieren, in die eine Bewegung des Roboters 23 nicht zulässig ist. Beispielsweise definiert der Roboter 23 auf Basis der Detektionsinformationen diejenigen Detektionsbereiche 3, für die die jeweilige Detektionsinformation anzeigt, dass dort kein Objekt 2 vorhanden ist, als Freigabebereiche. Zweckmäßigerweise definiert der Roboter 23, insbesondere die Steuereinheit 28, auf Basis der Detektionsinformationen diejenigen Detektionsbereiche 3, für die die jeweilige Detektionsinformation anzeigt, dass dort ein Objekt 2 vorhanden ist, als Sperrbereiche. Zweckmäßigerweise steuert die Steuereinheit 28 die Antriebseinrichtung 27 so an, dass der Roboter 23 sich in einen Freigabebereich bewegt und/oder sich nicht in einen Sperrbereich bewegt.

Ferner ist es möglich, dass der Roboter 23, insbesondere die Steuereinheit 28, auf Basis der von den Sensoreinrichtungen 1 erhaltenen Detektionsinformationen eine oder mehrere Freigaberichtungen definiert, in die eine Bewegung des Roboters 23 zulässig ist, und/oder auf Basis der erhaltenen Detektionsinformationen eine oder mehrere Sperrrichtungen definiert, in die eine Bewegung des Roboters 23 nicht zulässig ist, und die Steuereinheit 28 zweckmäßigerweise die Antriebseinrichtung 27 gemäß den definierten Freigaberichtungen und/oder den definierten Sperrrichtungen ansteuert, um eine Bewegung des Roboters 23 zu bewirken.

Optional ist der Roboter 23 ausgebildet, auf Basis der Detektionsinformation einen Sicherheitsmodus einzunehmen, in dem der Roboter 23 eine Bewegung mit einer reduzierten Geschwindigkeit ausführt. Insbesondere ist der Roboter 23 ausgebildet, in Ansprechen darauf, dass die Detektionsinformation anzeigt, dass ein Widerspruch zwischen der ersten Detektion und der zweiten Detektion besteht (insbesondere in Bezug auf die Bestimmung, ob sich in dem Detektionsbereich 3 ein Objekt 2 befindet), den Sicherheitsmodus einzunehmen. Ferner kann der Roboter 23 ausgebildet sein, den Sicherheitsmodus in Ansprechen darauf einzunehmen, dass die Detektionsinformation anzeigt, dass ein Abstand zu einem Objekt 2 kleiner als ein vorbestimmter Abstands-Schwellenwert ist.

Bevorzugt ist der Roboter 23 ausgebildet, auf Basis der Detektionsinformation eine Lokalisierung des Roboters 23 durchzuführen. Beispielsweise kann die Steuereinheit 28 ausgebildet sein, zu detektieren, dass die durch die Positions-Information angezeigten Objekte Referenz-Objekten entsprechen, die in einer Referenz-Lokalisierungsinformation enthalten sind, und auf Basis dieser Detektion (und einer in der Referenz-Lokalisierungsinformation definierten Referenz-Positions-Information) eine Position des Roboters 23 zu ermitteln.

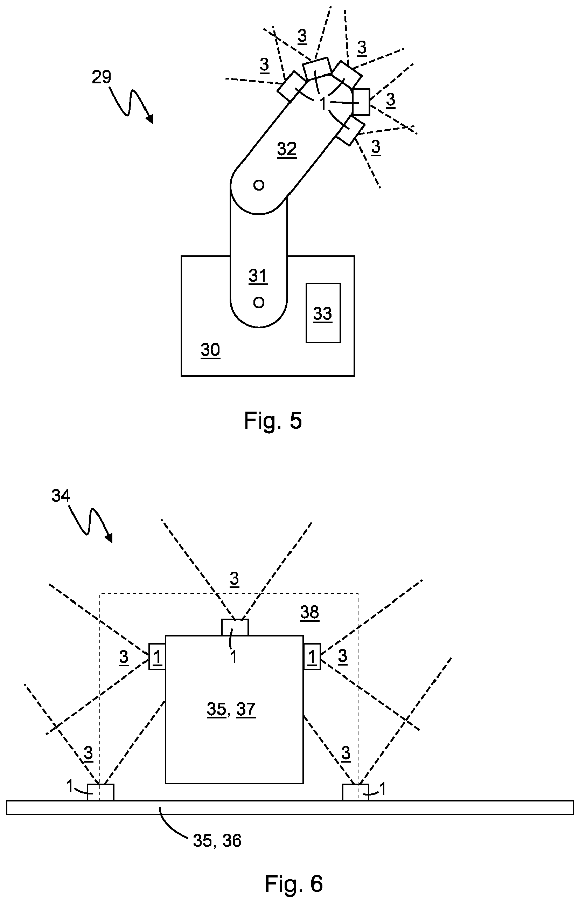

Die Figur 5 zeigt einen Roboter 29, der insbesondere als stationärer Roboter ausgeführt ist. Der Roboter 29 ist beispielsweise ein Industrieroboter. Der Roboter 29 verfügt exemplarisch über einen Basisabschnitt 30 und einen relativ zum Basisabschnitt 30 bewegbaren Roboterarm. Zweckmäßigerweise verfügt der Roboter 29 über einen oder mehrere Elektromotoren zum Antrieb des Roboterarms. Rein exemplarisch verfügt der Roboterarm über einen ersten Roboterarm-Abschnitt 31 und einen relativ zum ersten Roboterarm-Abschnitt 31 bewegbaren zweiten Roboterarm-Abschnitt 32.

Der Roboter 29 verfügt über wenigstens eine Sensoreinrichtung 1 (die insbesondere wie die vorstehend erläuterte Sensoreinrichtung 1 ausgebildet ist). Exemplarisch verfügt der Roboter 29 über mehrere Sensoreinrichtungen 1. Exemplarisch sind die Sensoreinrichtungen 1 an dem Roboterarm angeordnet.

Zweckmäßigerweise verfügt der Roboter 29 ferner über eine Steuereinheit 33, die zweckmäßigerweise mit den Sensoreinrichtungen 1 kommunikativ verbunden ist, und insbesondere ausgebildet ist, auf Basis der Detektionsinformationen von den Sensoreinrichtungen 1 den Roboterarm anzusteuern, um mit dem Roboterarm eine Bewegung durchzuführen. Beispielsweise ist die Steuereinheit 33 in Bezug auf die Definition von Freigabebereichen, Freigaberichtungen, Sperrbereichen und/oder Sperrrichtungen, und/oder in Bezug auf den Sicherheitsmodus wie die vorstehend erläuterte Steuereinheit 28 ausgebildet, so dass die diesbezüglichen vorstehenden Erläuterungen in Entsprechung auch für die Steuereinheit 33 gelten, wobei bei dem vorliegenden Roboter 29 eine Bewegung des Roboters insbesondere dadurch erfolgt, dass der Roboterarm bewegt wird.

Die Figur 6 zeigt einen stationären Aufbau 34 für die Industrieautomatisierung, umfassend eine stationäre Einrichtung 35. Exemplarisch umfasst die stationäre Einrichtung 35 eine Gebäudestruktur 36 (beispielsweise eine Wand) und/oder eine stationäre Maschine 37. Der stationäre Aufbau 34 umfasst ferner eine oder mehrere Sensoreinrichtungen 1, die insbesondere wie vorstehend erläutert ausgebildet ist. Optional kann der stationäre Aufbau 34 die vorstehend erläuterte Anordnung 15 und/oder die vorstehend erläuterte Anordnung 18 umfassen. Zweckmäßigerweise können die Sensoreinrichtungen 1 an der stationären Einrichtung 35, insbesondere an der Gebäudestruktur 36 und/oder der stationären Maschine 37 angebracht sein.

Bevorzugt dient die eine oder die mehreren Sensoreinrichtungen 1 dazu, ein Eindringen in einen Überwachungsbereich 38 zu detektieren. Die eine oder die mehreren Sensoreinrichtungen 1 fungieren insbesondere als Lichtschranke. Optional verfügt der stationäre Aufbau 34 über eine Steuereinheit, die zweckmäßigerweise ausgebildet ist, in Ansprechen auf ein Eindringen in den Überwachungsbereich 38 ein akustisches und/oder visuelles Warnsignal auszugeben und/oder die stationäre Maschine 37 abzuschalten oder in einen Sicherheitsmodus zu versetzen.

Gemäß einer optionalen Ausgestaltung wird eine Sensoreinrichtung 1 dazu verwendet, ein anderes System (z.B. einen Laser) zu ergänzen, beispielsweise um einen toten Winkel auszuleuchten.

## Patentansprüche

1. Sensoreinrichtung (1) für die Industrieautomation zur Detektion eines Objekts (2), insbesondere eines Kollisionsobjekts, in einem Detektionsbereich (3), umfassend:
eine Radar-Sensoreinheit (4), die ausgebildet ist, unter Verwendung von Radar eine erste Detektion durchzuführen, um zu bestimmen, ob sich in dem Detektionsbereich (3) ein Objekt (2) befindet, und gemäß der ersten Detektion ein Radar-Sensorsignal zu erzeugen,
eine ToF-Infrarot-Sensoreinheit (6), die ausgebildet ist, unter Verwendung einer Time-of-Flight-Messung eine zweite Detektion durchzuführen, um zu bestimmen, ob sich in dem Detektionsbereich (3) ein Objekt befindet, und gemäß der zweiten Detektion ein ToF-Sensorsignal zu erzeugen, und
eine Rechnereinheit (10), die ausgebildet ist, auf Basis des Radar-Sensorsignals und des ToF-Sensorsignals eine Detektionsinformation zu erzeugen, die anzeigt, ob sich in dem Detektionsbereich (3) ein Objekt (2) befindet.

2. Sensoreinrichtung (1) nach Anspruch 1, wobei die Sensoreinrichtung (1) als Sensormodul ausgebildet ist und/oder eine Leiterplatte (8) umfasst, auf der die Radar-Sensoreinheit (4) und die ToF-Infrarot-Sensoreinheit (6) angeordnet sind, und/oder eine flächenmäßig größte Seite der Leiterplatte (8) maximal 10 cm mal 10 cm groß ist.

3. Sensoreinrichtung (1) nach einem voranstehenden Anspruch, ferner umfassend eine Kommunikations-Schnittstelle (12), insbesondere eine Busschnittstelle, zur Bereitstellung der Detektionsinformation, wobei die Kommunikations-Schnittstelle (12) einen ersten Kommunikationsanschluss (13) und einen zweiten Kommunikationsanschluss (14) aufweist, über die die Sensoreinrichtung (1) mit weiteren Sensoreinrichtungen (1) verbindbar ist, um mit diesen eine Reihenschaltung zu bilden.

4. Sensoreinrichtung (1) nach einem der voranstehenden Ansprüche, wobei die Rechnereinheit (10) ausgebildet ist, auf Basis des Radar-Sensorsignals eine Plausibilisierung des ToF-Sensorsignals durchzuführen und/oder auf Basis des ToF-Sensorsignals eine Plausibilisierung des Radar-Sensorsignals durchzuführen, und die Detektionsinformation gemäß der Plausibilisierung zu erzeugen, wobei die Detektionsinformation vorzugsweise eine Plausibilisierungsinformation umfasst, die die Plausibilisierung anzeigt.

5. Sensoreinrichtung (1) nach einem der voranstehenden Ansprüche, wobei die Rechnereinheit (10) ausgebildet ist, zu prüfen, ob sowohl das Radar-Sensorsignal wie auch das ToF-Sensorsignal anzeigen, dass sich in dem Detektionsbereich (3) kein Objekt (2) befindet, und nur dann, wenn dies der Fall ist, mit der Detektionsinformation anzuzeigen, dass sich in dem Detektionsbereich (3) kein Objekt (2) befindet, und/oder wobei die Rechnereinheit (10) ausgebildet ist, in Ansprechen darauf, dass eines aus dem Radar-Sensorsignal und dem ToF-Sensorsignal anzeigt, dass sich in dem Detektionsbereich ein Objekt (2) befindet, zu prüfen, ob das andere aus dem Radar-Sensorsignal und dem ToF-Sensorsignal anzeigt, dass sich in dem Detektionsbereich (3) zusätzlich zu dem Objekt (2) ein weiteres Objekt (2) befindet, und, falls das nicht der Fall ist, in der Detektionsinformation anzugeben, dass zusätzlich zu dem Objekt (2) kein weiteres Objekt in dem Detektionsbereich (3) vorhanden ist.

6. Sensoreinrichtung (1) nach einem der voranstehenden Ansprüche, wobei die Detektionsinformation eine Positionsinformation umfasst, die eine Position eines in dem Detektionsbereich (3) befindlichen Objekts (2) anzeigt, wobei die Radar-Sensoreinheit (4) vorzugsweise ausgebildet ist, die Position des Objekts (2) mit einer ersten Genauigkeit zu detektieren und die ToF-Infrarot-Sensoreinheit (6) vorzugsweise ausgebildet ist, die Position des Objekts (2) mit einer zweiten Genauigkeit zu detektieren, die höher ist als die erste Genauigkeit, und die Rechnereinheit (10) vorzugsweise ausgebildet ist, die Positionsinformation auf Basis der mit der ToF-Infrarot-Sensoreinheit (6) detektierten Position zu erzeugen.

7. Sensoreinrichtung (1) nach einem der voranstehenden Ansprüche, wobei die Detektionsinformation eine Füllstandsinformation umfasst, die einen Füllstand eines in dem Detektionsbereich (3) befindlichen Fluids anzeigt, und/oder wobei die Detektionsinformation eine Materialinformation umfasst, die ein Material und/oder eine Materialklasse eines in dem Detektionsbereich (3) befindlichen Objekts anzeigt.

8. Sensoreinrichtung (1) nach einem der voranstehenden Ansprüche, ferner umfassend eine Leuchteinheit (11), insbesondere eine LED, wobei die Sensoreinrichtung (1) ausgebildet ist, mit der Leuchteinheit (11) ein Signal, insbesondere ein Warnsignal, auszugeben, und/oder eine Ausleuchtung eines Ausleuchtungsbereichs durchzuführen, wobei die Sensoreinrichtung (1) vorzugsweise ausgebildet ist, die Leuchteinheit (11) auf Basis des Radar-Sensorsignals, des ToF-Sensorsignals und/oder der Detektionsinformation anzusteuern.

9. Anordnung (15) umfassend mehrere kommunikativ miteinander verbundene Sensoreinrichtungen (1) gemäß einem der voranstehenden Ansprüche, wobei die Sensoreinrichtungen (1) vorzugsweise eine erste Sensoreinrichtung (1A) und eine zweite Sensoreinrichtung (1B) umfassen und die Anordnung (15) vorzugsweise ferner eine Auswerteeinheit (17) umfasst, die ausgebildet ist, eine erste Detektionsinformation von der ersten Sensoreinrichtung (1A) und eine zweite Detektionsinformation von der zweiten Sensoreinrichtung (1B) zu empfangen und die erste Detektionsinformation auf Basis der zweiten Detektionsinformation zu plausibilisieren.

10. Anordnung (18) nach Anspruch 9, umfassend ein Trägerband (19), auf dem die Sensoreinrichtungen (1) in Richtung des Bandverlaufs des Trägerbands (19) hintereinander angeordnet sind, um ein Sensorband zu bilden, wobei das Sensorband vorzugsweise in Richtung des Bandverlaufs aufteilbar ist, um wenigstens zwei funktionierende Sensorband-Teile (21A, 21B) zu erhalten.

11. Roboter (23, 29), insbesondere Transportroboter, umfassend eine Sensoreinrichtung (1) nach einem der Ansprüche 1 bis 8 oder eine Anordnung (15, 18) nach einem der Ansprüche 9 bis 10, wobei der Roboter (23, 29) zweckmäßigerweise ausgebildet ist, auf Basis der Detektionsinformation eine Bewegung des Roboters (23, 29) zu beginnen, zu ändern oder zu stoppen, und/oder wobei der Roboter (23) zweckmäßigerweise ausgebildet ist, auf Basis der Detektionsinformation eine Lokalisierung des Roboters (23) durchzuführen, und/oder wobei der Roboter (23, 29) zweckmäßigerweise ausgebildet ist, auf Basis der Detektionsinformation einen Sicherheitsmodus einzunehmen, in dem der Roboter (23, 29) eine Bewegung mit einer reduzierten Geschwindigkeit ausführt.

12. Roboter (23, 29) nach Anspruch 11, umfassend eine Anordnung (15, 18) nach einem der Ansprüche 9 bis 10, wobei die Detektionsbereiche (3) der Sensoreinrichtungen (1) zusammen einen Gesamt-Detektionsbereich von wenigstens 100 Grad, wenigstens 180 Grad, wenigstens 270 Grad oder von 360 Grad bilden.

13. Roboter (23, 29) nach einem der Ansprüche 11 bis 12, umfassend mehrere kommunikativ miteinander verbundene Sensoreinrichtungen (1) nach einem der Ansprüche 1 bis 8, wobei der Roboter (23, 29) über eine Steuereinheit (28, 33) verfügt, die ausgebildet ist, von jeder Sensoreinrichtung (1) eine jeweilige Detektionsinformation zu erhalten und auf Basis der erhaltenen Detektionsinformationen Freigabebereiche zu definieren, in die eine Bewegung des Roboters (23, 29) zulässig ist, und/oder auf Basis der erhaltenen Detektionsinformationen Sperrbereiche zu definieren, in die eine Bewegung des Roboters (23, 29) nicht zulässig ist.

14. Stationärer Aufbau (34) für die Industrieautomatisierung, umfassend eine stationäre Einrichtung (35), insbesondere eine Gebäudestruktur (36) und/oder eine stationäre Maschine (37), sowie eine Sensoreinrichtung (1) nach einem der Ansprüche 1 bis 8 oder eine Anordnung (15, 18) nach einem der Ansprüche 9 bis 10, wobei die Sensoreinrichtung (1) und/oder die Anordnung (15, 18) zweckmäßigerweise dazu dient, ein Eindringen in einen Überwachungsbereich (38) zu detektieren.

15. Verfahren zum Betreiben einer Sensoreinrichtung (1) nach einem der Ansprüche 1 bis 8, einer Anordnung (15, 18) nach einem der Ansprüche 9 bis 10, einem Roboter (23, 29) nach einem der Ansprüche 11 bis 13 oder einem stationären Aufbau (34) nach Anspruch 14, umfassen die Schritte:
- Durchführen der ersten Detektion mit der Radar-Sensoreinheit (4) und Erzeugen des Radar-Sensorsignals gemäß der ersten Detektion,
- Durchführen der zweiten Detektion mit der ToF-Infrarot-Sensoreinheit (6) und Erzeugen des ToF-Sensorsignals gemäß der zweiten Detektion, und
- Erzeugen, auf Basis des Radar-Sensorsignals und des ToF-Sensorsignals, der Detektionsinformation, die anzeigt, ob sich in dem Detektionsbereich (3) ein Objekt (2) befindet.
